# EUROPEAN PATENT APPLICATION

(11) **EP 3 376 566 A1**
(43) Date of publication of application: **19.09.2018**
(21) Application number: 17161609.7
(22) Date of filing: 17.03.2017
(51) Int. Cl.: H01M 2/34, H01M 10/44

(54) **OPERATING METHOD, CONTROL UNIT, BATTERY CELL, CELL MODULE, BATTERY AND APPARATUS**

(71) Applicant: Lithium Energy and Power GmbH & Co. KG, 70469 Stuttgart (DE)
(72) Inventor: FAKHRI, Morteza, 70437 Stuttgart (DE); KORN, Christian, 70190 Stuttgart (DE); PILZ, Thomas, 71229 Leonberg (DE); OHMER, Nils, 70569 Stuttgart (DE)
(74) Representative: Bee, Joachim

(57) **Abstract**

The present invention concerns an operating method for a fast discharge and/or shut down unit (30) of a battery cell (10). The operating method comprises a control section controlling the operation of the fast discharge and/or shut down unit (30) depending on the existence or non-existence of a fast discharge and/or shut down demanding state and a signaling section detecting and signaling to the control section the existence or non-existence of the fast discharge and/or shut down demanding state, wherein the signaling section uses one or a plurality of MEMS-based sensors (53') and wherein said one or plural MEMS-based sensors (53') are located in or on said battery cell (10), in or on a plurality of battery cells (10), an arrangement of battery cells (10), a cell module (110) or a battery (100), in particular in the battery cell's (10) vicinity.

## Description

### State of the Art

The present invention concerns an operating method and a control unit for a fast discharge and/or shut down unit of a battery cell, a battery cell, a cell module, a battery, and an apparatus and in particular a vehicle.

Recent growth of electronic industry has increased the demand for high performance, compact and portable electronic devices. Such electronic devices require batteries with high energy density and capacity. Particularly suitable for this purpose are nickel-rich and lithium-rich batteries. However, such batteries bear problems in case of battery cell failure or battery cell abuse. As a consequence, the battery may show undesired hazardous behavior, such as degassing, development of fire and explosion.

KR 10-1040471 and KR 2011-0064057 disclose apparatuses and methods for controlling the driving and operation of a battery.

In order to avoid such a hazardous behavior, battery cells have been equipped with fast discharge and/or shut down units, for instance together with certain separator configurations within the electrochemical part. The fast discharge and/or shutdown units may be configured in order to discharge the electrochemical part via a resistor to be connected between the battery cell terminals in order to reduce the energy amount stored in the electrochemical part and in particular to simultaneously increase the temperature of the separator within the electrochemical part in order to cause an at least partial impermeability of the separator with respect to a certain kind of ions, thereby achieving an irreversible passivation of the underlying battery cell.

In view of the safety aspects, the provision of a fast discharge and/or shut down unit as such may not be sufficient in order to cover all possible dangerous situations in an appropriate and flexible manner.

### Disclosure of the invention

The operating method according to the present invention as defined in independent claim 1, however, has the advantage of being more sensitive and flexible and thereby a more appropriate controlling of fast discharge and/or shut down units of battery cells. This is achieved according to independent claim 1, by providing an operating method for a fast discharge and/or shut down unit of a battery cell, wherein the operating method comprises (i) a control section controlling the operation of the fast discharge and/or shut down unit depending on the existence or non-existence of a fast discharge demanding state and/or shut down demanding state and (ii) a signaling section detecting and signaling to the control section the existence or non-existence of the fast discharge and/or shut down demanding state and wherein (iii) the signaling section uses one or a plurality of MEMS-based sensors and (iv) said one or plural MEMS-based sensors are located in or on said battery cell, in or on a plurality of battery cells, an arrangement of battery cells, a cell module or a battery, in particular in the battery cell's vicinity. It is in particular the provision and usage of MEMS-based sensors which establish the benefits of the operating method according to the present invention because of their sensitivity and flexibility when applied to different geometries. This is due to their micro-electromechanical (MEMS) configuration which can be applied to a large variety of different situations and setups. A state or a condition according to which a fast discharge and/or a shut down is to be performed is called a fast discharge demanding state or fast discharge state or a shut down demanding state or shut down state hereinafter.

The dependent claims contain advantageous embodiments of the present invention.

Although the MEMS-based sensor may simply be used as a binary switch, it is of particular advantage if - according to a preferred embodiment of the operating method - a respective MEMS-based sensor is operated as an acceleration sensor and in order to measure an acceleration along one, two or three spatial directions x, y, z which are in particular pairwise perpendicular with respect to each other.

In order to more thoroughly describe the operating situation and in particular the mechanical surrounding of a battery cell, a cell module or a battery it is of particular benefit if plural MEMS-based sensors are used and located at different positions and/or with different orientations regarding an underlying battery cell, plurality of battery cells, an arrangement of battery cells, a cell module and/or a battery.

The degree of reliability of the operating method can be increased by receiving signals from respective MEMS-based sensors, deciding from received signals and/or from a derivative and/or evaluation thereof - in particular by using a Fourier transform process - the existence or non-existence of a fast discharge and/or shut down state and/or initiating and/or performing based on the decision a fast discharge and/or shut down process, in each case for a battery cell, a plurality of battery cells, an arrangement of battery cells, a cell module, a battery and/or parts thereof.

In addition the degree of discrimination of different operating situations may further be enhanced by deriving from received signals and/or from a derivative and/or evaluation thereof a spatially resolved discrimination and/or distribution of the existence or non-existence of a fast discharge and/or shut down state and/or lodging or having lodged signal templates and/or derivative templates and deciding the existence or non-existence of a fast discharge and/or shut down state by comparing with lodged templates, in each case for a battery cell, a plurality of battery cells, an arrangement of battery cells, a cell module, a battery and/or parts thereof.

The present invention further concerns a control unit for a fast discharge and/or shut down unit of a battery cell, which is in particular configured in order to perform an operating method according to the present invention.

The control unit according to the present invention preferably comprises a control part which is configured in order to control the operation of the fast discharge and/or shut down unit depending on the existence or non-existence of a fast discharge and/or shut down demanding state.

In addition the control unit according to the present invention further comprises a signaling part which is configured in order to detect and signal to the control part the existence or non-existence of a fast discharge and/or shut down state.

According to the present invention, the signaling part is or comprises one or a plurality of MEMS-based sensors configured to be located or locatable in or on said battery cell, a plurality of battery cells, an arrangement of battery cells, a cell module or a battery, in particular in the battery cell's vicinity.

According to a preferred embodiment of the control unit defined by the present invention a respective MEMS-based sensor may be configured as an acceleration sensor and in order to measure an acceleration along one, two or three spatial directions x, y, z which are in particular pairwise perpendicular with respect to each other.

Additionally or alternatively, plural MEMS-based sensors may be provided and may be configured in order to be located or locatable at different positions and/or with different orientations regarding an underlying battery cell, a plurality of battery cells, an arrangement of battery cells, a cell module, a battery and/or parts thereof.

The control part is configured in order to receive signals from respective MEMS-based sensors, to decide from received signals and/or from a derivative and/or evaluation thereof - in particular by using a Fourier transform process - the existence or non-existence of a fast discharge and/or shut down state and/or to initiate and/or perform based on the decision the fast discharge and/or shut down process, in each case for a battery cell, a plurality of battery cells, an arrangement of battery cells, a cell module, a battery and/or parts thereof.

According to a further preferred embodiment of the present invention, the control part of the control unit may be configured in order to derive from received signals and/or from a derivative and/or evaluation thereof a spatially resolved discrimination of the existence or non-existence of a fast discharge and/or shut down state and/or to have lodged signal templates and/or derivative templates and to decide the existence or non-existence of a fast discharge and/or shut down state by comparing with lodged templates, in each case for a battery cell or a plurality thereof, for an arrangement of battery cells, a cell module, a battery and/or parts thereof.

According to a further aspect of the present invention an improved battery cell is suggested.

The battery cell according to the present invention comprises
- first and second battery cell terminals for an external contact of the battery cell, an electrochemical part, preferably formed as or comprising a jelly roll or an electrode stack configuration, connected to the battery cell terminals,
- a fast discharge and/or shut down unit connected to the battery cell terminals in parallel to the electrochemical part and configured in order to discharge and/or to shut down the battery cell under first predetermined conditions by connecting the battery cell terminals via a resistor, and
- a control unit or a connection to a control unit which is formed according to the present invention.

In addition, the battery cell according to the present invention may be configured such that the electrochemical part comprises a positive electrode, a negative electrode, an electrolyte component having a conductive salt component and a solvent component, and a separator.

The separator may be configured in order to become at least partially impermeable for ions generated inside of the electrochemical part upon reaching a predefined temperature.

The fast discharge unit may be configured in order to discharge the battery cell by means of a first current flowing through the battery cell and the fast discharge unit by connecting the first and second battery cell terminals via the resistor of the fast discharge unit.

The resistor may in particular be selected in order to cause the first current during a current flow through the battery cell and the fast discharge unit to heat the electrochemical part such that the separator reaches the predefined temperature. The resistance of the fast discharge unit may further be selected in order to avoid a thermal runaway of the battery cell during the heating of the electrochemical part by the first current flowing through electrochemical part and the fast discharge unit.

The battery cell according to the present invention has the advantage of supporting the effects due to a fast discharge operation by offering the opportunity to electrochemically passivate the battery cell such that the separated part or the entire battery cell does not contribute to the overall thermal budget.

This is achieved by the battery cell by comprising
(1) first and second battery cell terminals for an external contact of the battery cell,
(2) an electrochemical part, preferably formed as or comprising a jelly roll or an electrode stack configuration, connected to the battery cell terminals,
(3) a fast discharge unit connected to the battery cell terminals in parallel to the electrochemical part and configured to discharge the battery cell under first predetermined conditions by connecting the battery cell terminals via a resistor, and
(4) a control unit or a connection to a control unit, wherein the control unit is formed according to the present invention.

The electrochemical part of the inventive battery cell preferably comprises a positive electrode, a negative electrode, an electrolyte component having a conductive salt component and a solvent component, and a separator.

The degree of security of the inventive battery cell can be further increased if the separator is configured to become at least partially impermeable for ions generated inside of the electrochemical part upon reaching a predefined temperature.

The degree of reliability of the battery cell can be further increased if (a) the fast discharge unit is configured to discharge the battery cell by means of a first current flowing through the battery cell and the fast discharge unit by connecting the first and second battery cell terminals via the resistor of the fast discharge unit and (b) the resistor is in particular selected to cause the first current during a current flow through the battery cell and the fast discharge unit to heat the electrochemical part such that the separator reaches the predefined temperature.

In order to even better avoid hazardous situations for the battery cell, the resistance of the fast discharge unit may be selected in order avoid a thermal runaway of the battery cell during the heating of the electrochemical part by the first current flowing through electrochemical part and the fast discharge unit.

The inventive battery cell may comprise two battery cell terminals which are contactable from outside of the battery cell and an electrochemical part which is preferably constructed in the form of at least one jelly roll/electrode stack comprising a plurality of electrodes, an electrolyte comprising at least one conductive salt and at least one solvent, and at least one separator.

The at least one separator may be constituted such that it becomes at least partially impermeable for ions which can be generated inside of the electrochemical part, when the at least one separator reaches a predefined temperature.

In order to increase the safety of the inventive battery cell, the battery cell includes a fast discharge unit having at least one resistor. The fast discharge unit is connectable between the two battery cell terminals and configured to discharge the battery by means of a first current flowing through the battery and the fast discharge unit.

More particular, a first resistance value of the at least one resistor may be selected in such a way, that the first current causes during a through flowing of the battery and the fast discharge unit such a heating of the electrochemical part, that the at least one separator reaches the predefined temperature.

In other words, within a few milliseconds after activation of the fast discharge the charge carriers in front of the electrodes are discharged very fast. This leads to a depletion of charge carriers in front of the electrodes and causes a first strong polarization of the electrodes. Within the next few hundred milliseconds, in a second step, the charge carriers already existing in the electrolyte will be very fast discharged in comparison to the slower deinsertion/insertion reaction of the electrodes, to the slow diffusion through the solid-electrolyte interface (SEI) and to the slow diffusion in the active material. This causes a strong separation of charge carries in front of the electrode which causes a further increasing of electrode polarization and a high voltage drop of the battery cell and a first plateau phase is reached.

The faster the discharge, the higher is the safety behavior of the battery cell, because the discharge current rapidly decreases and the warming of the battery cell is not locally fixed at a damage zone. Therefore, the total warming of the battery cell is low compared to the local warming in case of a short circuit.

In addition, the present invention also suggests a configuration for a cell module comprising a plurality of battery cells which are formed according to the present invention.

The battery according to the present invention may be formed by a plurality of cell modules and/or a plurality of battery cells, both formed according to the present invention.

According to a preferred embodiment of the inventive battery, the plurality of battery cells is configured as a plurality of pairs of battery cells, wherein at least one of the members of the pairs of battery cells is formed according to the present invention. It is of particular advantage that in the pairs it is sufficient that one of the members of the pairs is provided with the inventive concept of having a separation means. This reduces the burden of establishing the respective equipment.

However, a more preferred embodiment of the present invention provides for each battery cell of the plurality of battery cells a configuration according to the present invention, namely by establishing for each battery cell in the battery an individual fast discharge unit together with a respective control unit in particular with respective control parts and/or actuating and/or signaling parts.

Eventually, an apparatus is proposed which is in particular formed as a vehicle.

The apparatus according to the present invention comprises an operation part and an energizing part configured in order to energize the operation part. The energizing part is or comprises one or a plurality of battery cells, cell modules and/or batteries, each of which configured according to the present invention.

### Brief description of the drawings

In the following section embodiments of the present invention are disclosed with reference to the enclosed figures.
- Figure 1: gives a schematic side view of an embodiment of the apparatus according to the present invention based on an embodiment of the battery cell according to the present invention and using the inventive operating concept for a battery cell and its fast discharge and/or shut down unit.
- Figure 2: is a schematic presentation of an embodiment of a battery according to the present invention.
- Figures 3 and 4: schematically elucidate by means of graphs an embodiment of an evaluation procedure on which the operating method according to the present invention may be based.

### Embodiments of the present invention

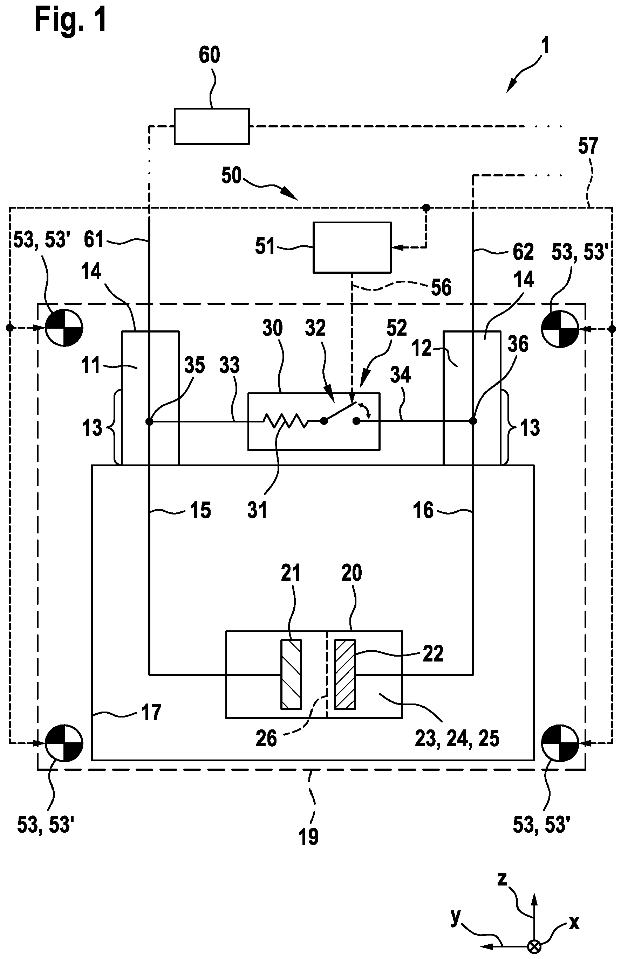

In the following, embodiments and the technical background of the present invention are described in detail by taking reference to accompanying figures 1 to 4. Identical or equivalent elements and elements which act identically or equivalently are denoted with the same reference signs. Not in each case of their occurrence a detailed description of the elements and components is repeated.

The depicted and described features and further properties of the invention's embodiments can arbitrarily be isolated and recombined without leaving the gist of the present invention.

Figure 1 gives a schematic side view of an embodiment of the apparatus 1 according to the present invention based on an embodiment of the battery cell 10 according to the present invention and using the inventive operating concept for a battery cell 10 and its fast discharge and/or shut down unit 30.

The battery cell 10 shown in figure 1 comprises in a housing 17 an electrochemical part 20 which is formed by a first or positive electrode 21, a second or negative electrode 22 and an electrolyte component 23 having at least one salt component 24 and at least one solvent component 25.

The electrodes 21, 22 are immersed in the electrolyte 23 and they are separated by a separator 26 which has the property of becoming at least partially impermeable upon reaching from below a predetermined temperature threshold for one or several ion species generated in the battery cell 10.

The battery cell 20 is connected via terminal lines 15 and 16 to first and second battery cell terminals 11, 12 which are configured for establishing an external contact, e.g. for supplying electric power via supply lines 61, 62 to a load 60 in order to run a particular device providing the load 60.

Each of the first and second battery terminals 11, 12 comprises a connection side part 13 for establishing a connection to the battery cell 20 and its terminal lines 15, 16 on the one hand and a fast discharge unit 30 to be described below on the other hand.

In addition, the first and second battery terminals 11, 12 also comprise an external side part 14 for being contacted to respective supply lines 61, 62 connected to the load 60.

In addition to the terminal lines 15, 16 for connecting the battery cell 20, at connection nodes 35, 36 discharge lines or contacts 33 and 34 are provided in the connection side part 13. For connecting to the connection side parts 13 of the first and second battery cell terminals 11, 12, the fast discharge unit 30 which is configured in order to perform a fast discharge of the battery cell 20 under certain conditions and in order to thereby avoid hazardous situations.

As shown schematically in figure 1, this may be done by operating a discharge switch 32 for closing the connection between the connection nodes 35 and 36 for discharging the battery cell 10 and its electrochemical part 20 via the serially enclosed discharge resistor 31 having an appropriate resistance value.

On the one hand, the resistance value of the resistor 31 is chosen to achieve a discharge of the battery cell 20 as fast as possible but simultaneously to avoid a thermal run away of the battery cell 10 and its electrochemical part 20.

In order to further support the safety aspects implemented by the fast discharge and/or shut down unit 30, a control unit 50 is provided which is formed according to the present invention.

The control unit 50 is configured to trigger by the trigger line 56 and the trigger probe 52 the discharge switch 32 of the underlying fast discharge and/or shut down unit 30.

The operations of the fast discharge and/or shut down unit 30 on the one hand and of the control unit 50 on the other hand may be triggered by first and second predetermined conditions which may also be equal and/or which may depend on each other.

The control unit 50 as designed according to the present invention comprises a control part 51 and a actuating and/or signaling part 53 formed by a plurality of MEMS-based sensors 53' which are connected to the control part 51 via a sensor line 57. This sensor line 57 may be realized wirelessly or may be based on any kind of connection line. The sensor line 57 may be referred to as an external connection.

Via an external connection 56, the control part 51 of the control unit 50 is capable of conditionally initiating operating the fast discharge and/or shut down unit 30.

Via connection with trigger line 56, the control part 51 and in particular the entire control unit 50 may be separated and externally be mounted with respect to the battery cell 10 and/or the fast discharge and shut down 30.

The conditions for operating the fast discharge and/or shut down unit 30 may be set based on the conditions and on the operation state of the electrochemical part 20 of the battery cell 10 and - according to the present invention - additionally on external fast discharge and/or shut down conditions, for instance of other and spatially separated battery cells 10, other modules 110 of batteries 100.

These external conditions may be due to the externally and/or remotely positioning and/or the signaling of the signaling part 53 with its MEMS-based sensors 53' when compared to the electrochemical part 20, the battery cell 10 and its fast discharge and/or shut down unit 30 and may be realized based on sensing a physical property established externally to the battery cell 10.

According to the present invention the fast discharge and/or shutdown unit 30 cannot only be triggered internally but also by measures which are in relation to the battery cell 10, the module 110 and the battery 100 situated externally.

This is achieved by having provided according to the present invention a separate and/or remote actuating and/or signaling part 53 as a part of the control unit 50 according to the present invention. The actuating and/or signaling part 53 formed by the plurality of MEMS-based sensors 53' is connected to the control part 51 by means of a system of sensor lines 7.

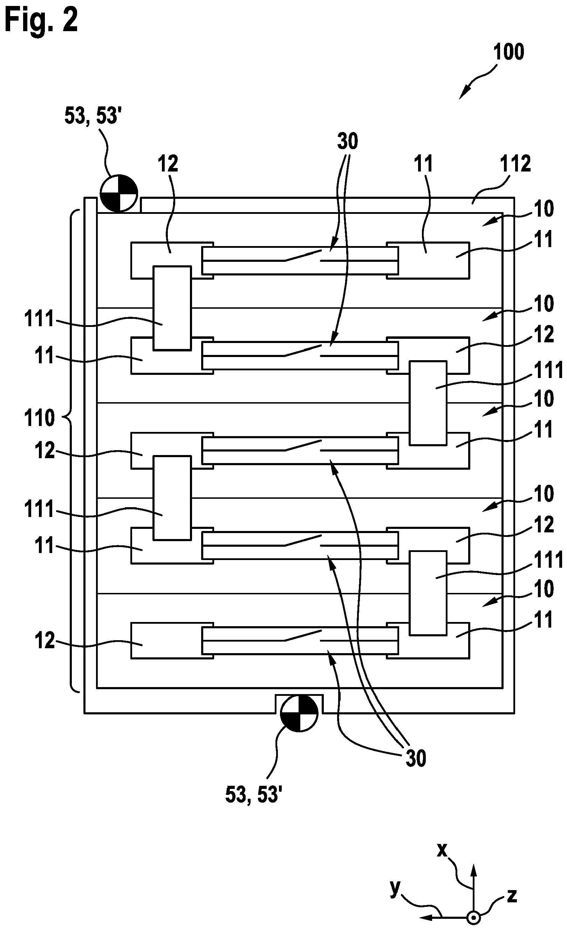

Figure 2 is a schematic presentation of an embodiment of a battery 100 according to the present invention.

The battery 100 according to figure 2 is formed by one or a plurality of cell modules 110 each formed by a plurality of battery cells 10 which are configured according to the present invention. Each of the battery cells 10 comprises besides its electrochemical part 20 and its first and second battery cell terminals 11 and 12 an individual fast discharge and/or shut down unit 30.

The battery 100 or module 110 is mechanically stabilized by a module frame 112. Directly neighboring battery cells 10 in the module 110 are electrically connected by respective cell connectors 111.

According to the present invention a plurality of two MEMS-based sensors 53' is attached to or embedded within the module frame 112.

The frames of reference in figures 1 and 2 with spatial directions x, y and z demonstrate the positioning and orientation of the battery cell 10, the module 110, the battery 100 and the apparatus 1 in space.

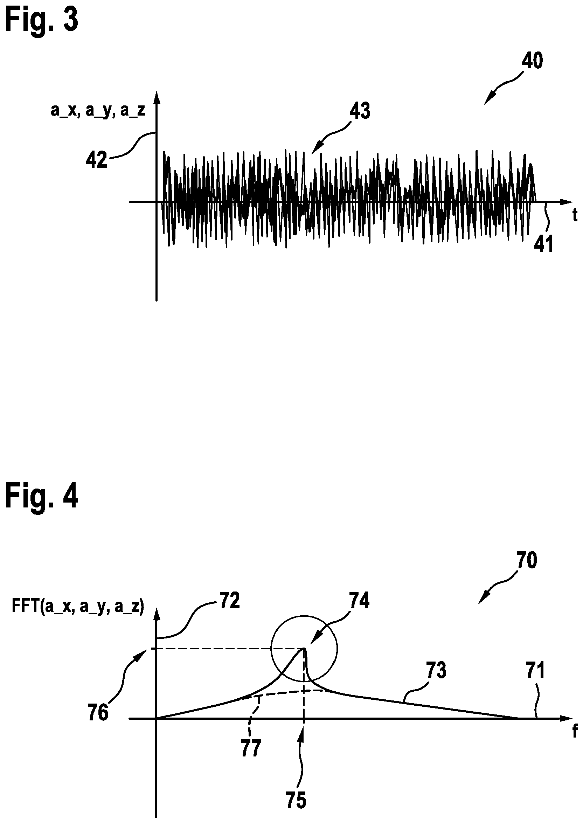

Figures 3 and 4 schematically elucidate by means of graphs 40 and 70 an embodiment of an evaluation procedure on which the operating method according to the present invention may be based.

In figure 3, the graph 40 depicts on the abscissa 41 the time t and on the ordinate the x, y and z components a_x, a_y, a_z of the acceleration a measured by one or a plurality of said mems-based sensors 53'. The trace 43 of graph 40 gives a kind of noisy signal.

Figure 4 with graph 70 depicts on the abscissa 71 the frequency f and on the ordinate 72 the Fourier transform FFT(a_x, a_y, a_z) of the acceleration signals shown in figure 3.

The special feature 74 at a particular frequency value 75 having a particular amplitude value 76 can be used in order to discriminate a normal use from an abuse situation, in particular when the normal use situation is indicated by the dotted trace 73'.

These and further features, properties and advantages of the present invention will be further discussed in the following:
The present invention inter alia refers to an MEMS-based sensor system for recognizing an abuse situation of lithium ion cells 10, cell modules 110 and/or batteries 100, in particular in the field of electric vehicles and/or hybrid vehicles.

Batteries 100 for electric vehicles (EV) and for hybrid vehicles (HEV) as well as of vehicles with plug in hybrid electric drive (PHEV) based on lithium ion technology (LIT) are in general hierarchically configured. The smallest unit is formed by the battery cells 10, a plurality of which forming a cell module. A plurality of modules is assembled into a battery 100.

In order to increase the driving range of a vehicle 1 and also in order to lower the costs, increasing energy densities are envisaged. The lithium ion chemistry having high energy densities yield in general increasing reaction kinetics in case of an error. In order to avoid, for instance a thermal runaway of the battery 100 and other error events e.g. accompanied by accidents (simulated by a nail penetration) and/or by internal short circuits, a battery cell 10 can be equipped with a so called fast discharge and/or shutdown device 30 which is configured to conditionally transfer a battery cell 10, a module or even an entire battery 100 into a secure and safe state by means of electrochemical passivation.

For such a transfer into a secure and safe state recognizing a critical situation as fast as possible is essential.

The present invention presents a concept for achieving a fast recognition of mechanical error events such as strong deformations of a battery cell 10, penetration of the cell 10 by an object, for instance a nail and the like. A key aspect involved in order to solve these issues sensitive acceleration detection elements are involved.

The present concept according to the present invention allows a comparable fast recognition thereby yielding a reliable crush and/or penetration detection for battery cells 10, cell modules and batteries in the field of EV, HEV, and PHEV.

According to a core aspect of the present invention a sensor system 53 is provided which is based on acceleration sensors having a MEMS component 53'. The MEMS component 53' according to the present invention is configured in order to detect non-specified mechanical deformations of a battery cell 10, a cell module 110 or a battery 100, for instance in case of a crash and/or in case of a penetration of the battery cell, a cell module or a battery by a conducting entity, for instance the nail and/or within a short time of about up to 10 ms.

According to the present invention the recognition shall be fast and reliable in order to trigger at an early stage of the whole process the battery cell 10, the cell module 110 or the battery 100 and its discharge switch 32 of an underlying fast discharge and/or shut down device 30 in order to achieve a secure and safe state of the battery cell 10, the module 110 or the battery 100 in time by passivation and shut down of the electrochemical processes.

Some of the advantages achieved by the present invention are:
- the fast recognition of critical processes by using the MEMS technology,
- applicability to manifold situations and therefore a precise adaptability to the structure and the configuration of an apparatus to be secured, for instance to a vehicle, and/or to the particularities of the deformation insecurity concerned processes, for instance crashes, accidents and the like,
- the usage and application of common and known MEMS sensors 53' and switches, thereby yielding less expensive elements at high lot sizes,
- achieving a reliable trigger process for a fast discharge and/or shut down unit or device 30, and
- a reliable determination and gathering of mechanical data of a battery cell 10, a cell module or a battery 100 in particular in order to achieve and yield a transverse comparison between the battery cells 10, cell modules and batteries 100 in view of their mechanical loads.

The present invention also suggests a battery module 110 having a plurality of battery cells 10. The plural battery cells may be connected in a series.

The involved lithium ion chemistry is a high energy chemistry which requires for safety reasons and/or in order to handle abuse cases a fast discharge and/or shut down unit or device 30 which is configured in order to transfer the respective battery cell 10, and an entire module 110 and/or an entire battery 100 into a safe state.

According to an alternative view, a cell module 110 equipped with a mechanical module frame 112 which is configured in order to mount the individual battery cells 10 during their lifespan and in order to secure the plurality mounted battery cells 10 against normal mechanical impacts.

In addition and as a further aspect of the present invention the usage of MEMS elements 53' in the sense of microelectromechanical switches and/or sensors is proposed in order to handle abuse situations of battery cells 10, cell modules 110 and/or batteries 100.

According to a further aspect of the present invention a corresponding control unit 50 with the control part 51 for handling the abuse situations of battery cells 10, cell modules 110 and/or batteries 100 is suggested which can be referred to as an electronic control unit for evaluating detection signals provided by the MEMS elements 53' referred to as acceleration sensors.

A prerequisite for the functioning of the underlying detection principle for detecting abuse situations may be seen in the precise knowledge about the module mechanics of the involved cell modules 110 or either of the individual battery cells 10. This may be achieved by providing a precise mechanical model lodged or deposited in the control unit 50.

A second requirement is the determination of the position and/or orientation of the sensors 53' mounted for instance on a module frame 112 of a cell module 110.

Although in general a single sensor 53' is sufficient, it may be of advantage if a plurality of sensors 53' is used and provided, for instance to for achieving differential evaluation.

Each sensor 53' can be evaluated regarding the three spatial directions x, y, z. In this sense each sensor 53' may be configured in order to detect values of the acceleration components a_x, a_y, a_z in these three spatial directions x, y, z.

When using two or more sensors 53', it is not necessary to have the sensing directions of the sensors 53' in parallel to each other.

Depending on the robustness and/or accuracy of the detection it may be advantageous to have the sensors 53' antiparallel or oriented in his cue manner, for instance by 45°.

The particular configuration of the system may be achieved by following one or a plurality of the following aspects:
- The selection of the number of the sensors 53', the axes when compared to the spatial directions x, y and z, the measuring range and the accuracy for each sensor 53' may be a critical issue and may be ruled according to the particular application.
- The location and/or the orientation of the respective sensors 53' at or on the housing of frame 112 of the cell module 110, the battery cell 10 and/or the entire battery 100 may be a crucial point, too.
- The off-line application - in particular of the underlying control unit 50 - may be ruled by following one or a plurality of the following aspects:
   - The battery cell 10, the cell module 110 or even the entire battery 100 has to be handled and moved according to typical vibration and/or shock profiles as they occur during the normal usage within a vehicle 1.
   - Based on the usage of the reference sensors the acceleration values at the location of the acceleration measuring sensors 53' as shown in figures 1 and 2 are measured.
   - In addition, the typical acceleration may be measured, which is due to an acceleration of the module frame 112 based on aging processes.
   - All these data may be referred to as a data set A being descriptive for a "normal use".
   - In addition, measurement data are collected which are descriptive for an abuse situation, for instance in connection with a deformation due to crash and/or penetration by nails or other components.
   - These data may be referred to as a data set B descriptive for an "abuse" situation.
   - In a following step appropriate properties of features have to be found in order to be enabled to discriminate and separate data from data set A and data from data set B in a robust and reliable manner.
   - Such features and/or properties may be derived by using a low parse filter and/or a fast Fourier transformation process FFT as indicated in figure 3.
   - For a classification of the data sets a support vector machine and/or any other machine learning methods may be involved.
- Establishing a classification method/software, in particular in connection with the underlying control unit 50 might be envisaged, too:
   - The application referred to in the step of the off-line processing may be transferred to the control unit 50 and it may also be tested against situations having a mechanical load in the normal manner. Thereby validation of the separation and discrimination of data sets A and B may be achieved. Depending on the results a further adaptation of the steps as described above may be required.

Application of the inventive system:
- The data fetched by means of the acceleration sensor 53 may be continuously evaluated, for instance at a high-frequency above 1 kHz. In addition and based on the lodged classification scheme it may be checked whether the mechanical situation for the battery cell 10, the cell module 110 and/or for the entire battery 100 is normal or abnormal, i.e. whether or not an abuse situation has occurred.
- In the case determining a mechanical abuse situation, the involved fast discharge and/or shut down units or devices 30 are triggered based on the control unit 50 and its control part 51, its trigger line 56 and the involved trigger probe 52.

Depending on the number of involved acceleration sensors 53' in the form of MEMS components 53', the mechanical situation and in particular the discrimination between normal and abuse may be spatially resolved. When using a lower spatial resolution, any battery cell 10 has to be transferred into a safe state. If however the spatial resolution is sufficient, only the battery cells 10 involved in the mechanical abuse have to be transferred into a safe state, whereas the battery cells 10 under normal use may remain in the normal state.

The above described system and method may be extended in order to detect the charged state of the respective cells 10 within a module 110 based on a correlation between the so-called state of charge SOC and the swelling of the anode of each of the battery cells 10.

## Claims

1. Operating method for a fast discharge and/or shut down unit (30) of a battery cell (10), the operating method comprising:
- a control section controlling the operation of the fast discharge and/or shut down unit (30) depending on the existence or non-existence of a fast discharge and/or shut down demanding state and
- a signaling section detecting and signaling to the control section the existence or non-existence of the fast discharge and/or shut down demanding state,
wherein
- the signaling section uses one or a plurality of MEMS-based sensors (53') and
- said one or plural MEMS-based sensors (53') are located in or on said battery cell (10), in or on a plurality of battery cells (10), an arrangement of battery cells (10), a cell module (110) or a battery (100), in particular in the battery cell's (10) vicinity.

2. Operating method according to claim 1,
wherein a respective MEMS-based sensor (53') is operated as an acceleration sensor and in order to measure an acceleration along one, two or three spatial directions (x, y, z) which are in particular pairwise perpendicular with respect to each other.

3. Operating method according to any one of the preceding claims,
wherein plural MEMS-based sensors (53') are used and located at different positions and/or with different orientations regarding an underlying battery cell (10), a plurality of battery cells (10), an arrangement of battery cells (10), a cell module (110) and/or a battery (100).

4. Operating method according to any one of the preceding claims, comprising
- receiving signals from respective MEMS-based sensors (53'),
- deciding from received signals and/or from a derivative and/or evaluation thereof - in particular by using a Fourier transform process - the existence or non-existence of a fast discharge and/or shut down demanding state and/or
- initiating and/or performing based on the decision a fast discharge and/or shut down process,
in each case for a battery cell (10), a plurality of battery cells (10), an arrangement of battery cells (10), a cell module (110), a battery (100) and/or parts thereof.

5. Operating method according to any one of the preceding claims, comprising
- deriving from received signals and/or from a derivative and/or evaluation thereof a spatially resolved discrimination and/or distribution of the existence or non-existence of a fast discharge and/or shut down demanding state and/or
- lodging or having lodged signal templates and/or derivative templates and deciding the existence or non-existence of a fast discharge and/or shut down demanding state by comparing with lodged templates,
in each case for a battery cell (10), a plurality of battery cells (10), an arrangement of battery cells (10), a cell module (110), a battery (100) and/or parts thereof.

6. Control unit (50) for a fast discharge and/or shut down unit (30) of a battery cell (10), which is in particular configured in order to perform an operating method according to any one of claims 1 to 5,
the control unit (50) comprising:
- a control part (51) configured in order to control the operation of the fast discharge and/or shut down unit (30) depending on the existence or non-existence of a fast discharge and/or shut down demanding state and
- a signaling part (53) configured in order to detect and signal to the control part (51) the existence or non-existence of a fast discharge and/or shut down demanding state,
wherein the signaling part (53) is or comprises one or a plurality of MEMS-based sensors (53') configured to be located or locatable in or on said battery cell (10), a plurality of battery cells (10), an arrangement of battery cells (10), a cell module (110) or a battery (100), in particular in the battery cell's (10) vicinity.

7. Control unit (50) according to claim 6,
wherein a respective MEMS-based sensor (53') is configured as an acceleration sensor and in order to measure an acceleration along one, two or three spatial directions (x, y, z) which are in particular pairwise perpendicular with respect to each other.

8. Control unit (50) according to claim 6 or 7,
comprising plural MEMS-based sensors (53') configured in order to be located or locatable at different positions and/or with different orientations regarding an underlying battery cell (10), plurality of battery cells (10), arrangement of battery cells (10), cell module (110), a battery (100) and/or parts thereof.

9. Control unit (50) according to any one of claims,
wherein the control part (51) is configured in order
- to receive signals from respective MEMS-based sensors (53'),
- to decide from received signals and/or from a derivative and/or evaluation thereof - in particular by using a Fourier transform process - the existence or non-existence of a fast discharge and/or shut down demanding state and/or
- to initiate and/or perform based on the decision the fast discharge and/or shut down process,
in each case for a battery cell (10), a plurality of battery cells (10), an arrangement of battery cells (10), a cell module (110), a battery (100) and/or parts thereof.

10. Control unit (50) according to any one of the preceding claims,
wherein the control part (51) is configured in order
- to derive from received signals and/or from a derivative and/or evaluation thereof a spatially resolved discrimination of the existence or non-existence of a fast discharge and/or shut down demanding state and/or
- to have lodged signal templates and/or derivative templates and to decide the existence or non-existence of a fast discharge and/or shut down demanding state by comparing with lodged templates,
in each case for a battery cell (10) or a plurality thereof, for an arrangement of battery cells (10), a cell module (110), a battery (100) and/or parts thereof.

11. Battery cell (10), comprising:
- first and second battery cell terminals (11, 12) for an external contact of the battery cell (10),
- an electrochemical part (20), preferably formed as or comprising a jelly roll or an electrode stack configuration, connected to the battery cell terminals (11, 12),
- a fast discharge and/or shut down unit (30) connected to the battery cell terminals (11, 12) in parallel to the electrochemical part (20) and configured in order to discharge and/or to shut down the battery cell (10) under first predetermined conditions by connecting the battery cell terminals (11, 12) via a resistor (31), and
- a control unit (50) or a connection (56) to a control unit (50), wherein the control unit (50) is formed according to any one of claims 6 to 10.

12. Battery cell (10) according to claim 11, wherein
- the electrochemical part (20) comprises a positive electrode (21), a negative electrode (22), an electrolyte component (23) having a conductive salt component (24) and a solvent component (25), and a separator (26),
- wherein the separator (26) is configured in order to become at least partially impermeable for ions generated inside of the electrochemical part (20) upon reaching a predefined temperature,
- the fast discharge unit (30) is configured in order to discharge the battery cell (10) by means of a first current flowing through the battery cell (10) and the fast discharge unit (30) by connecting the first and second battery cell terminals (11, 12) via the resistor (31) of the fast discharge unit (30),
- the resistor (31) is in particular selected in order to cause the first current during a current flow through the battery cell (10) and the fast discharge unit (30) to heat the electrochemical part (20) such that the separator (26) reaches the predefined temperature, and/or
- wherein the resistance (31) of the fast discharge unit (30) is selected in order to avoid a thermal runaway of the battery cell (10) during the heating of the electrochemical part by the first current flowing through electrochemical part (20) and the fast discharge unit (30).

13. Cell module (110), comprising a plurality of battery cells (10) according to claim 11 or 12.

14. Battery (100), comprising a plurality of cell modules (110) according to claim 13 and/or a plurality of battery cells (10) according to claim 11 or 12.

15. Apparatus (1) and in particular vehicle, comprising:
- an operation part and
- an energizing part for energizing the operation part,
wherein the energizing part is or comprises one or a plurality of battery cells (10) according to any one of claims 11 and 12, cell modules (110) according to claim 13 and/or batteries (100) according to claim 14.
